# EUROPÄISCHE PATENTSCHRIFT

(11) **EP 2 358 990 B1**
(45) Veröffentlichungstag und Bekanntmachung des Hinweises auf die Patenterteilung: **20.09.2017**
(21) Anmeldenummer: 09771707.8
(22) Anmeldetag: 28.11.2009
(51) Int. Cl.: F02N 11/08, B60W 30/18

(54) **VERFAHREN ZUM AUTOMATISCHEN ABSCHALTEN UND STARTEN EINER BRENNKRAFTMASCHINE**
METHOD FOR AUTOMATIC START AND STOP OF A COMBUSTION ENGINE
MÉTHODE POUR DÉMARRAGE ET ARRÊT AUTOMATIQUE D'UN MOTEUR À COMBUSTION

(30) Priorität: 11.12.2008 DE 102008061790
(43) Veröffentlichungstag der Anmeldung: 24.08.2011
(73) Patentinhaber: Bayerische Motoren Werke Aktiengesellschaft, 80809 München (DE)
(72) Erfinder: BOLLIG, Marcus, 81479 München (DE); POGGEL, Jürgen, 85630 Grasbrunn (DE)
(86) Internationale Anmeldenummer: PCT/EP2009/008482
(87) Internationale Veröffentlichungsnummer: WO 2010/066350

(56) Entgegenhaltungen:
- EP-A1- 1 469 195
- WO-A1-2004/091961
- DE-A1-102006 028 336
- DE-A1-102007 010 488
- DE-B3- 10 211 463

## Beschreibung

Die Erfindung bezieht sich auf ein Verfahren zum automatischen Abschalten und Starten einer Brennkraftmaschine in einem Fahrzeug nach dem Oberbegriff des Patentanspruchs 1.

Derzeitig werden Brennkraftmaschinen meist mittels eines Zündschlüssels durch den Fahrer manuell abgeschaltet. Eine Ausnahme stellt ein Verfahren dar, welches in der DE 100 23 331 A1 vorgestellt wird. Dabei wird anstelle des Zündschlüssels die Bremspedalstellung bzw. der Bremspedaldruck ausgewertet. Der Abschaltvorgang der Brennkraftmaschine wird eingeleitet, wenn nach Erreichen des Stillstands des Kraftfahrzeugs das Bremspedal in seiner bereits betätigten Stellung stärker betätigt wird. Zur Weiterfahrt wird das Bremspedal losgelassen und das Gaspedal gedrückt, wonach ein Start der Brennkraftmaschine eingeleitet wird. Nachteilig ist an derartigen Verfahren, dass alleine der Kraftfahrzeugfahrer für das Abschalten der Brennkraftmaschine verantwortlich ist. Analysen des heutigen Fahrverhaltens zeigen, dass trotz eines gestiegenen Umweltbewusstseins und gestiegener Kraftstoffpreise ein manuelles Abschalten der Brennkraftmaschine, z. B. an Verkehrsampeln, selten eigenständig erfolgt.

Um Kraftstoffverbrauch und Schadstoffemissionen zu reduzieren, werden derzeit Verfahren und Systeme entwickelt und zum Teil auch bereits eingesetzt, welche die Brennkraftmaschine eines Kraftfahrzeugs unter bestimmten Voraussetzungen bzw. bei Vorliegen vorgegebener Abschaltbedingungen automatisch abschalten und bei Vorliegen vorgegebener Anschaltbedingungen automatisch wieder anschalten. Derartige Verfahren und Systeme bzw. Start-Stopp-Einrichtungen sind vor allem für den Stadtverkehr zur Reduzierung des Kraftstoffverbrauchs geeignet, da im Stadtverkehr das Fahrzeug oft an Ampeln oder aufgrund des Verkehrs zum Stehen kommt und der Betrieb der Brennkraftmaschine nicht erforderlich ist.

Zum Beispiel ist aus der EP 0 158 605 B1 eine Vorrichtung bekannt, die abhängig von verschiedenen Bedingungen ein Abstellen bzw. ein erneutes Starten der Brennkraftmaschine bewirkt. Eine Bedingung zum Einleiten eines automatischen Abschaltvorgangs ist beispielsweise, dass die Fahrzeuggeschwindigkeit für eine bestimmte Zeit unterhalb eines Grenzwertes liegen muss, bevor die Brennkraftmaschine automatisch abgestellt wird.

Nachteilig ist an derartigen Verfahren und Vorrichtungen, dass die aktuelle Verkehrssituation nicht berücksichtigt werden kann. Die Brennkraftmaschine wird demzufolge auch in solchen Situationen abgeschaltet, in denen es der Fahrer aus Komfortgründen nicht wünscht. Beispielsweise ist ein automatisches Abschalten der Brennkraftmaschine an einer Abbiegespur oder an einem Stoppschild bei einer sofortigen Weiterfahrtmöglichkeit nicht erwünscht. Insbesondere bei Fahrzeugen mit Automatikgetriebe kann unter der Voraussetzung, dass die Brennkraftmaschine bei einem Bremsvorgang Kraftstoffpreise ein manuelles Abschalten der Brennkraftmaschine, z. B. an Verkehrsampeln, selten eigenständig erfolgt.

Um Kraftstoffverbrauch und Schadstoffemissionen zu reduzieren, werden derzeit Verfahren und Systeme entwickelt und zum Teil auch bereits eingesetzt, welche die Brennkraftmaschine eines Kraftfahrzeugs unter bestimmten Voraussetzungen bzw. bei Vorliegen vorgegebener Abschaltbedingungen automatisch abschalten und bei Vorliegen vorgegebener Anschaltbedingungen automatisch wieder anschalten. Derartige Verfahren und Systeme bzw. Start-Stopp-Einrichtungen sind vor allem für den Stadtverkehr zur Reduzierung des Kraftstoffverbrauchs geeignet, da im Stadtverkehr das Fahrzeug oft an Ampeln oder aufgrund des Verkehrs zum Stehen kommt und der Betrieb der Brennkraftmaschine nicht erforderlich ist.

Zum Beispiel ist aus der EP 0 158 605 B1 eine Vorrichtung bekannt, die abhängig von verschiedenen Bedingungen ein Abstellen bzw. ein erneutes Starten der Brennkraftmaschine bewirkt. Eine Bedingung zum Einleiten eines automatischen Abschaltvorgangs ist beispielsweise, dass die Fahrzeuggeschwindigkeit für eine bestimmte Zeit unterhalb eines Grenzwertes liegen muss, bevor die Brennkraftmaschine automatisch abgestellt wird.

Weiter ist aus der DE 10 2007 010488 A1 ein Verfahren zum automatischen Abschalten und Starten einer Brennkraftmaschine bekannt, bei dem die Brennkraftmaschine automatisch abgeschaltet wird, wenn das Fahrzeug in den Stillstand abgebremst und durch Betätigung des Bremspedals über eine vorgegebene Bremspedalpositionsschwelle im Stillstand gehalten wird, und bei dem die automatisch abgeschaltete Brennkraftmaschine gestartet wird, wenn ein Lösen des betätigten Bremspedals bis zu einer vorgegebenen zweiten Positionsschwelle detektiert wird.

Schließlich ist aus der DE 102 11 463 B3 noch ein ähnliches Verfahren zum automatischen Abschalten und Starten der Brennkraftmaschine bekannt, bei dem aus Sicherheitsgründen ein Starten der automatisch abgeschalteten Brennkraftmaschine beim Lösen des Bremspedals nur dann zugelassen wird, wenn die Fahrertür geschlossen ist.

Nachteilig ist an derartigen Verfahren und Vorrichtungen, dass die aktuelle Verkehrssituation nicht berücksichtigt werden kann. Die Brennkraftmaschine wird demzufolge auch in solchen Situationen abgeschaltet, in denen es der Fahrer aus Komfortgründen nicht wünscht. Beispielsweise ist ein automatisches Abschalten der Brennkraftmaschine an einer Abbiegespur oder an einem Stoppschild bei einer sofortigen Weiterfahrtmöglichkeit nicht erwünscht. Insbesondere bei Fahrzeugen mit Automatikgetriebe kann unter der Voraussetzung, dass die Brennkraftmaschine bei einem Bremsvorgang bis in den Stillstand automatisch abgestellt wird, der Fahrer einen automatischen Abschaltvorgang nicht verhindern. Wird als Startsystem ein kostengünstiger Ritzelstarter eingesetzt, ist ein Einspuren, also ein Starten der laufenden Brennkraftmaschine nicht oder nur mit Komforteinbußen für den Fahrer möglich. Dadurch ergeben sich ebenfalls unter Umständen längere Startzeiten.

Um dieses Problem zu umgehen, sind bereits Verfahren und Systeme bekannt, bei denen der Fahrer ein automatisches Abschalten verhindern kann. So offenbart die EP 1 469 195 B1 ein Verfahren zum automatischen Abschalten einer Brennkraftmaschine in einem Fahrzeug, bei dem der Fahrer innerhalb eines vorgegebenen Zeitintervalls nach Erreichen des Stillstands den automatischen Abschaltvorgang verhindern kann. Bspw. wird der automatische Abschaltvorgang nicht eingeleitet, wenn der Fahrer innerhalb des vorgegebenen Zeitintervalls nach Erreichen des Stillstands das Bremspedal verstärkt durchtritt.

Nachteilig ist an oben genannten Verfahren, dass der Fahrer während der gesamten Dauer, bei der die Brennkraftmaschine abgeschaltet ist, das Bremspedal in gedrückter Position halten muss um keinen (ungewollten) Start der Brennkraftmaschine einzuleiten. Dies kann unter Umständen zu Komforteinbußen beim Fahrer führen. Weiter kann es dazu führen, dass der Fahrer die Brennkraftmaschine bewusst früher als notwendig automatisch Starten lässt, um den Fuß vom Bremspedal nehmen zu können.

Aufgabe der Erfindung ist, ein Verfahren zum automatischen Abschalten und Starten einer Brennkraftmaschine in einem Fahrzeuge in der Weise zu verbessern, dass der Fahrer bei abgeschalteter Brennkraftmaschine das Bremspedal nicht ständig gedrückt halten muss und trotzdem ein Wegrollen des Fahrzeugs ohne dauerhafte Betätigung des Bremspedals verhindern wird.

Diese Aufgabe wird erfindungsgemäß durch ein Verfahren nach Patentanspruch 1 gelöst. Vorteilhafte Weiterbildungen sind die Gegenstände der abhängigen Ansprüche.

Bei dem erfindungsgemäßen Verfahren zum automatischen Abschalten und Starten einer Brennkraftmaschine in einem Kraftfahrzeug mittels einer Start-Stopp-Einrichtung wird ein automatischer Abschaltvorgang prinzipiell dann eingeleitet, wenn das Fahrzeug durch den Fahrer in den Stillstand abgebremst und (ggf. für ein vorgegebenes Zeitintervall) im Stillstand gehalten wurde. Stillstand des Fahrzeugs wird erkannt, wenn die Fahrzeuggeschwindigkeit zumindest nahezu Null oder genau Null ist. Wird das Fahrzeug durch Betätigung des Bremspedals im Stillstand gehalten (idealerweise für ein vorgegebenes Zeitintervall), wird die Brennkraftmaschine automatisch durch die Start-Stopp-Einrichtung abgeschaltet. Die Start-Stopp-Einrichtung kann bspw. ein eigenständiges Steuergerät, oder im Motorsteuergerät integriert sein.

Ist das Verfahren zum automatischen Abschalten und Starten der Brennkraftmaschine derart ausgestaltet, dass die aufgrund Abbremsen und Halten des Fahrzeugs im Stillstand automatisch abgeschaltete Brennkraftmaschine prinzipiell dann wieder automatisch gestartet wird, wenn der Fahrer seinen Fuß vom Bremspedal nimmt, muss der Fahrer zum Aufrechterhalten des Stillstands die Bremse dafür dauerhaft betätigen. Erfindungsgemäß wird deshalb vorgeschlagen, dass bei automatisch abgeschalteter Brennkraftmaschine ein automatisches Starten der Brennkraftmaschine bei Lösen des Bremspedals verhindert wird, wenn der Fahrer vorab bei abgeschalteter Brennkraftmaschine das Bremspedal verstärkt durchtritt. Dies bedeutet, dass durch das verstärke Durchtreten ein Einschaltverhinderer aktiviert wird, so dass bei anschließendem Lösen des Bremspedals bei automatisch abgeschalteter Brennkraftmaschine kein automatischer Start der Brennkraftmaschine einleitet wird. Somit kann der Fahrer auch bei derartigen Funktionslogiken zum automatischen Abschalten und Starten der Brennkraftmaschine den Fuß bei automatisch abgeschalteter Brennkraftmaschine vom Bremspedal nehmen und entspannt warten, bis er wieder losfahren kann.

Dieses Verfahren ist besonders für Fahrzeuge mit Automatikgetrieben von Vorteil, da hier der Fahrer in der Regel den Gangwahlhebel bei Fahrzeugstillstand in der normalen Position belässt und kein Kupplungspedal vorhanden ist, welches hinsichtlich des Fahrerwunsches ausgewertet werden könnte. Unter dem Begriff Automatikgetriebe sind neben den herkömmlichen Automatikgetrieben auch alle zumindest teilweise automatisierten Getriebe incl. Doppelkupplungsgetriebe zu verstehen (Getriebe mit und ohne Wandler, EGS, SMG). Allerdings ist dieses Verfahren auch bei Fahrzeugen mit Handschaltgetrieben einsetzbar.

Um das Fahrzeug bei abgeschalteter Brennkraftmaschine ohne dauerhafte Betätigung des Bremspedals im Stillstand halten zu können, wird erfindungsgemäß entweder durch eine entsprechende Handlung des Fahrers oder bei Vorliegen eines bestimmten Ereignisses eine Haltefunktion zum automatischen Halten des Fahrzeugs im Stillstand aktiviert. Der Fahrer kann den Fuß vom Bremspedal nehmen ohne Gefahr zu laufen, dass das Fahrzeug bspw. aufgrund einer Neigung der Straße wegrollt.

Die Haltefunktion kann dabei frühestens bei Erreichen des Stillstands aktiviert werden. Alternativ kann sie auch erst dann automatisch aktiviert werden, wenn die Brennkraftmaschine automatisch abgeschaltet wird, oder wenn der Fahrer zum Aktivieren oben genannten Einschaltverhinderers das Bremspedal bei abgeschalteter Brennkraftmaschine verstärkt durchtritt. Um ein Wegrollen des Fahrzeugs zu verhindern, wenn der Fahrer (bei abgeschalteter Brennkraftmaschine) die Bremse löst, sollte die Haltefunktion bei vorangegangener Aktivierung des Einschaltverhinderers (kein Einschalten beim Lösen der Bremse) spätestens beim Lösen des Bremspedals automatisch aktiviert werden.

Unter dem Begriff Haltefunktion sind alle Funktionen bzw. Eingriffe in die Fahrzeugsteuerung zu verstehen, die zumindest ein Vorwärts- oder Rückwärtsbewegen des Fahrzeugs verhindern. Reduziert der Fahrer den Bremsdruck durch Lösen des Bremspedals und verhindert innerhalb des vorgegebenen Zeitintervalls den automatischen Abschaltvorgang der Brennkraftmaschine, kann z. B. zum Aufrechterhalten des Stillstands des Fahrzeugs im Sinne einer Aktivierung einer Haltefunktion die über einen hydraulischen Wandler erzeugte Kriechfunktion des Fahrzeugs deaktiviert werden. Zusätzlich oder alternativ kann gleichzeitig das Fahrzeug mittels eines im Stillstand automatisch aktivierbaren Bremseingriffs im Stillstand gehalten werden, d. h. es wird z. B. Feststellbremsfunktionen zum temporären Halten eines betriebsbereiten Kraftfahrzeugs im Stillstand aktiviert. Derartige Bremseingriffe bzw. Funktionen und die entsprechenden Vorrichtungen sind bspw. unter den Namen Anfahrassistent, Bergassistent, Hillhold(er), Automatic Hold oder im Rahmen von Geschwindigkeitsregelsystemen mit Abstandshaltefunktion bis in den Stillstand bekannt. Diese das Anrollen des betriebsbereiten Kraftfahrzeugs verhindernden Systeme sind dabei bspw. als (elektro-) hydraulische oder als (elektro-) pneumatische oder ggf. auch als elektro-mechanische, elektronisch regelbare Bremssysteme ausgebildet, mittels derer das Festhalten und die Verhinderung des Anrollens des betriebsbereiten Kraftfahrzeugs temporär bewerkstelligt wird.

Auch sind Verfahren bekannt, bei denen das Anrollen des Fahrzeugs über das Getriebe (insbesondere Automatikgetriebe) bzw. durch eine entsprechende Getriebefunktion verhindert wird. Demnach kann alternativ oder zusätzlich zum aktiven Bremseingriff oder zum Deaktivieren einer vorhandenen Kriechfunktion als Haltefunktion eine sog. Auto-P-Funktion zum Halten des Fahrzeugs im Stillstand aktiviert werden.

Hat der Fahrer bei abgeschalteter Brennkraftmaschine den Einschaltverhinderer gesetzt und das Bremspedal gelöst, kann er den automatischen Start der Brennkraftmaschine - vorteilhafterweise bei Fahrzeugen mit Automatikgetrieben oder zumindest teilweise automatisierten Getrieben - dadurch einleiten, indem er das Gaspedal betätigt. Die Brennkraftmaschine wird dann wieder gestartet und er kann losfahren. Zum Detektieren der Gaspedalbetätigung kann im Gaspedal analog einem Bremslichtschalter im Bremspedal ein Schalter eingebaut werden, der eine Betätigung des Gaspedals frühzeitig erkennt.

Um eine unnötige Zeitverzögerung zwischen der Gaspedalbetätigung und dem Losfahren verhindern oder zumindest reduzieren zu können, kann idealerweise auch eine Fußraumsensorik im Fahrzeug vorgesehen sein, mittels derer bereits frühzeitig eine Gaspedalbetätigung und somit ein Losfahrwunsch erkannt werden kann. Die Fußraumsensorik kann in einfachster Weise als Abstandssensor zum Detektieren des Fußabstands zum Gaspedal ausgestaltet sein. Wird ein vorgegebener Abstand zum Gaspedal unterschritten, wird die Brennkraftmaschine automatisch gestartet.

Wurde im Vorfeld die Haltefunktion automatisch aktiviert, sollte mit Betätigung des Gaspedals die aktivierte Haltefunktion automatisch wieder deaktiviert werden. Um zu verhindern, dass das Fahrzeug wegrollt, bevor ausreichend Antriebsmoment bereitgestellt werden kann, wird die bspw. aufgrund verstärkter Betätigung des Bremspedals zum Aktivieren des Einschaltverhinderers aktivierte Haltefunktion dann deaktiviert, wenn die nach dem vorgegebenen Zeitintervall nach Erreichen des Stillstands automatisch abgeschaltete Brennkraftmaschine automatisch angeschaltet wird und/oder wenn das Gaspedal betätigt wird und/oder wenn die Brennkraftmaschine ein genügend großes Antriebsmoment zum Halten des Fahrzeugs im Stillstand zur Verfügung stellt.

Um den Fahrer bspw. an Stoppschildern die Möglichkeit geben zu können, ein automatisches Abschalten der Brennkraftmaschine trotz Abbremsen und Halten im Stillstand verhindern zu können, soll der Fahrer innerhalb eines vorgegebenen Zeitintervalls nach Erreichen des Stillstands die Möglichkeit haben, den automatischen Abschaltvorgang zu verhindern. Ein automatisches Abschalten der Brennkraftmaschine kann bspw. dadurch verhindert werden, dass der Fahrer innerhalb des vorgegebenen Zeitintervalls nach Erreichen des Stillstands das Bremspedal löst, also durch entsprechende Betätigung des Bremspedals den vom Bremspedal aufgebrachten Bremsdruck reduziert. Um ein Lösen des Bremspedals erkennen zu können, kann bspw. ein Signal eines im Bremspedal angeordneten (Bremslicht-)Schalters ausgewertet werden. Falls der durch das Bremspedal erzeugte Bremsdruck bzw. das Bremsmoment oder der entsprechende Gradient ausgewertet werden soll, kann der Bremsdruck bzw. das Moment bspw. mittels eines entsprechenden Sensors festgestellt werden.

Reduziert der Fahrer den Bremsdruck durch Lösen des Bremspedals und verhindert innerhalb des vorgegebenen Zeitintervalls den automatischen Abschaltvorgang der Brennkraftmaschine, kann zum Aufrechterhalten des Stillstands des Fahrzeugs die über einen hydraulischen Wandler erzeugte Kriechfunktion des Fahrzeugs deaktiviert werden, und gleichzeitig das Fahrzeug mittels eines im Stillstand automatisch aktivierbaren Bremseingriffs im Stillstand gehalten werden, d. h. es wird Feststellbremsfunktionen zum temporären Halten eines betriebsbereiten Kraftfahrzeugs im Stillstand aktiviert.

Löst der Fahrer innerhalb des vorgegebenen Zeitintervalls ab Erreichen des Stillstands nicht das Bremspedal, wird die Brennkraftmaschine nach Ablauf des Zeitintervalls automatisch abgeschaltet. Vorteilhafterweise wird die automatisch abgeschaltete Brennkraftmaschine unter der Voraussetzung, dass der Fahrer das Bremspedal nicht verstärkt betätigt hat, dann wieder automatisch angeschaltet, wenn der Fahrer das Bremspedal löst und/oder wenn der vom Fahrer aufgebrachte Bremsdruck einen vorgegebenen Bremsdruck-Schwellwert unterschreitet und/oder wenn das vom Fahrer aufgebrachte Bremsmoment einen vorgegebenen Bremsmoment-Schwellwert unterschreitet, und/oder wenn der beim Lösen des Bremspedals erreichte negative Bremsgradient (Bremsmomentgradient oder Bremsdruckgradient) einen vorgegebenen Bremsgradienten-Schwellwert erreicht oder überschreitet und/oder wenn der Fahrer das Gaspedal betätigt. Hat der Fahrer durch verstärktes Durchtreten des Bremspedals den Brems-Löse-Einschaltverhinderer aktiviert, führt ein Lösen der Bremse nicht zum Start der Brennkraftmaschine. Ein Start erfolgt dann erst, wenn der Fahrer das Gaspedal betätigt oder eine zeitnahe Gaspedalbetätigung zu vermuten ist.

Um zu verhindern, dass das Fahrzeug bereits vor dem Start der Brennkraftmaschine wegrollt, kann - wie bereits oben dargestellt wurde - bei abgeschalteter Brennkraftmaschine spätestens mit Lösen des Bremspedals bzw. mit Reduzierung des vom Fahrer aufgebrachten Bremsdrucks gleichzeitig eine Haltefunktion bzw. Feststellbremsfunktion, insbesondere eine Auto-Holdfunktion aktiviert werden. Diese bleibt solange aktiv, bis die Antriebseinheit gestartet ist und sich das Fahrzeug aufgrund der Gaspedalbetätigung in Bewegung setzt bzw. in Bewegung setzen könnte.

Vorteilhafterweise kann dem Kraftfahrzeugfahrer mittels eines ersten Anzeigeelements mitgeteilt werden, sobald er das automatische Abschalten der Brennkraftmaschine verhindern kann. Sind die vorgegebenen Betriebsbedingungen erfüllt, d. h. das Fahrzeug wurde bis in den Stillstand abgebremst und alle sonstigen Bedingungen sind ebenfalls erfüllt, leuchtet bspw. eine LED auf, die dem Fahrer signalisiert, dass die Brennkraftmaschine in Kürze durch die Start-Stopp-Einrichtung abgeschaltet wird. Als Anzeigeelement können aber auch Lautsprecher für ein akustisches Signal oder andere Elemente für optische oder haptische Signale verwendet werden. Alternativ oder zusätzlich kann ein zweites Anzeigeelement dann aktiviert werden, wenn die Brennkraftmaschine automatisch abgeschaltet wurde. Das zweite Anzeigeelement kann derart ausgestaltet sein, dass es dem Fahrer einen Hinweis gibt, wie er bzw. durch welche Handlung er einen Start der Brennkraftmaschine wieder auslösen kann. Ist dies bspw. durch ein Lösen des Bremspedals möglich, kann ein Bremspedalsymbol dargestellt werden, von dem sich der Fuß wegbewegt.

Alternativ oder zusätzlich kann ein drittes Anzeigeelement für die Dauer der aktiven Haltefunktion aktiviert werden, so dass der Fahrer weiß, dass das Fahrzeug trotz Lösen des Bremspedals weiter im Stillstand gehalten wird.

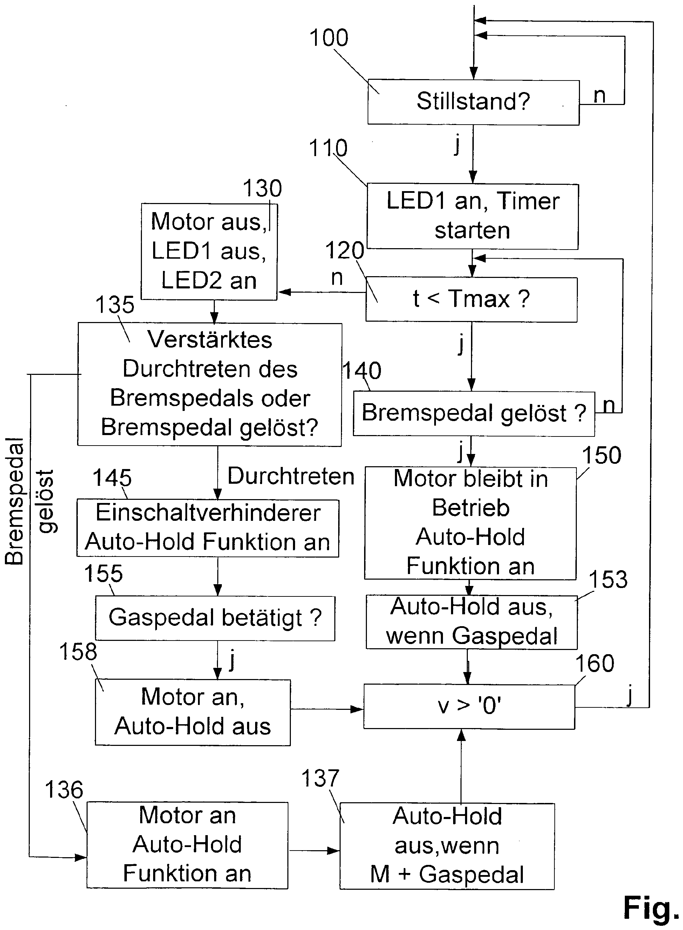

In der Zeichnung ist ein Ausführungsbeispiel der Erfindung dargestellt. Die einzige Fig. zeigt dabei ein vereinfachtes Ablaufdiagramm für das erfindungsgemäße Verfahren am Beispiel eines Kraftfahrzeugs mit Automatikgetriebe.

Das Verfahren beginnt im Schritt 100, bei dem alle Bedingungen (fahrerseitige Bedingungen, wie z. B. Bremsbetätigung, und systemseitige Bedingungen, wie z. B. Ladezustand der Batterie), die für ein automatisches Abschalten der Brennkraftmaschine notwendig sind, abgefragt werden. Insbesondere wird abgefragt, ob das Fahrzeug durch Bremsbetätigung des Fahrers in den Stillstand abgebremst wurde.

Sobald ein Abbremsen des Fahrzeugs bis in den Stillstand erfolgt ist und alle sonstigen (systemseitigen) Abschaltbedingungen erfüllt sind, wird im nächsten Schritt 110 eine LED1 als erstes Anzeigeelement eingeschalten. Damit wird dem Kraftfahrzeugfahrer mitgeteilt, dass die Brennkraftmaschine nach Ablauf eines vorgegebenen Zeitintervalls Tmax ausgeschalten wird, wenn er dies nicht verhindert. Gleichzeitig wird im Schritt 110 ein Timer zum Überwachen des vorgegebenen Zeitintervalls Tmax (z. B. 1 Sekunde) gestartet, innerhalb dessen der Fahrer den automatischen Abschaltvorgang verhindern kann.

Anschließend wird in einem nächsten Schritt 120 die seit dem Start des Timers vergangene Zeit t abgefragt. Solange die vergangene Zeit t kleiner als das vorgegebenes Zeitintervall Tmax ist, wird in einem nächsten Schritt 140 ein Lösen des Bremspedals überwacht. Wenn kein Lösen des Bremspedals erkannt wird, wird auf den Schritt 120 zurückgesprungen und die Zeitüberwachung weiterhin durchgeführt. Sobald der Timer abgelaufen ist, d. h. die seit dem Starten des Timers vergangene Zeit t ist größer als das vorgegebene Zeitintervall Tmax, wird in bekannter Weise im Schritt 130 der Motor automatisch abgeschaltet. Gleichzeitig wird die erste LED1 deaktiviert und eine zweite Anzeige LED2 aktiviert, die dem Fahrer mitteilt, dass das die Brennkraftmaschine automatisch abgeschaltet wurde.

Bei ausgeschaltetem Motor wird im nächsten Schritt 135 eine Änderung der Bremspedalbetätigung überwacht. Insbesondere wird dabei überwacht, ob das Bremspedal übertreten, also kurzzeitig verstärkt durchgetreten wird, oder ob das Bremspedal gelöst wird. Sobald ein Lösen des Bremspedals bei automatisch abgeschalteter Brennkraftmaschine erkannt wird, wird im Schritt 136 der automatische Anschaltvorgang eingeleitet und der Motor bspw. mittels Ritzelstarter gestartet. Ggf. kann - um ein Wegrollen des Fahrzeugs zwischen dem Zeitpunkt des Lösens des Bremspedals und dem Zeitpunkt, ab dem der Motor ein Antriebsmoment erzeugt - eine sog. Auto-Hold Funktion als automatische Haltefunktion zum Halten des Fahrzeugs im Stillstand aktiviert werden. Alternativ, hier aber nicht dargestellt, kann die Haltefunktion auch bereits bei Erreichen des Stillstands in Schritt 110 aktiviert werden. Gleichzeitig kann eine entsprechende Anzeige im Instrumentenkombi aktiviert werden. Prinzipiell würde der Fahrer nicht bemerken, dass die Haltefunktion (Auto-Hold) bereits aktiv ist, allerdings würde im durch die entsprechende Anzeige vermittelt werden, dass bei einem Lösen des Bremspedals zum erneuten Starten des Motors das Fahrzeug (trotz Neigung der Straße) nicht wegrollt sondern im Stillstand gehalten wird.

Nach dem Anschalten des Motors wird zum Schritt 137 übergangen. Dort wird die automatisch aktivierte Haltefunktion wieder deaktiviert, sobald der Fahrer seinen Fuß auf dem Gaspedal hat und von der Brennkraftmaschine ausreichend Antriebmoment M zum Beschleunigen des Fahrzeugs zur Verfügung gestellt werden kann. Erst wenn in einem letzten Schritt 160 die Fahrzeuggeschwindigkeit aufgrund Gaspedalbetätigung wieder größer als in etwa Null ist, beginnt das Verfahren von neuem.

Wird jedoch im Schritt 135 nicht ein Lösen des Bremspedals, sondern ein verstärktes Durchtreten des Bremspedals registriert, wird vom Schritt 135 zum Schritt 145 übergegangen. Dort wird ein Bremspedal-Löse-Einschaltverhinderer aktiviert, so dass beim anschließenden Lösen des Bremspedals kein automatisches Starten der Brennkraftmaschine eingeleitet wird. Der Fahrer kann somit seinen Fuß vom Bremspedal nehmen und entspannt abwarten, bis er aufgrund der Verkehrsituation ein erneutes Starten der Brennkraftmaschine wünscht. Gleichzeitig wird als Haltefunktion eine sog. Auto-Holdfunktion aktiviert, die beim Lösen des Bremspedals ein Wegrollen des Fahrzeugs verhindert.

Da aufgrund des Durchtretens des Bremspedals der Einschaltaufforderer, der prinzipiell bei einem Lösen des Bremspedals bei automatisch abgeschalteter Antriebseinheit ein Starten der Brennkraftmaschine auslöst, deaktiviert bzw. zu einem Einschaltverhinderer wurde, wird nun im nächsten Schritt nicht das Lösen des Bremspedals, sondern die Betätigung des Gaspedals überwacht. Sobald eine Betätigung des Gaspedals erkannt wird, wird im nächsten Schritt 158 die Brennkraftmaschine wieder gestartet und die Auto-Hold-Funktion deaktiviert. Erst wenn in einem letzten Schritt 160 die Fahrzeuggeschwindigkeit aufgrund Gaspedalbetätigung wieder größer als in etwa Null ist, beginnt das Verfahren von neuem.

Um den Fahrer bspw. an Stoppschildern die Möglichkeit geben zu können, ein automatisches Abschalten der Brennkraftmaschine trotz Abbremsen und Halten im Stillstand verhindern zu können, soll der Fahrer innerhalb eines vorgegebenen Zeitintervalls nach Erreichen des Stillstands die Möglichkeit haben, den automatischen Abschaltvorgang zu verhindern. Dies wird im Schritt 140 überwacht. Wird jedoch innerhalb des vorgegebenen Zeitintervalls Tmax ein Lösen des Bremspedals erkannt, wird davon ausgegangen, dass der Fahrer kein automatisches Abschalten des Motors wünscht. Demnach wird im Schritt 150 das automatische Abschalten der Brennkraftmaschine verhindert. Die Brennkraftmaschine bleibt in Betrieb. Um ein Wegrollen des Fahrzeugs beim Lösen der Bremse zu verhindern, wird automatisch die Auto-Hold Funktion als Haltefunktion, insbesondere als automatischer Bremseingriff zum Halten des Fahrzeugs im Stillstand aktiviert und zu Schritt 153 übergegangen. Sobald zu erkennen ist, dass der Fahrer wieder Gas gibt, wird die automatisch aktivierte Haltefunktion wieder deaktiviert. Erst wenn in einem letzten Schritt 160 die Fahrzeuggeschwindigkeit aufgrund Gaspedalbetätigung wieder größer als in etwa Null ist, beginnt das Verfahren von neuem.

## Patentansprüche

1. Verfahren zum automatischen Abschalten und Starten einer Brennkraftmaschine in einem Kraftfahrzeug, insbesondere in einem Kraftfahrzeug mit Automatikgetriebe, mittels einer Start-Stopp-Einrichtung, welche die Brennkraftmaschine automatisch abschaltet, wenn das Fahrzeug in den Stillstand abgebremst und durch Betätigung des Bremspedals im Stillstand gehalten wird, und welche bei automatisch abgeschalteter Brennkraftmaschine und Lösen des betätigten Bremspedals die Brennkraftmaschine automatisch startet, **dadurch gekennzeichnet, dass** bei automatisch abgeschalteter Brennkraftmaschine ein automatisches Starten der Brennkraftmaschine durch Lösen der Bremse verhindert wird (145), wenn zuvor bei abgeschalteter Brennkraftmaschine eine Änderung der Bremspedalbetätigung im Sinne eines verstärkten Durchtretens des Bremspedals registriert wird.

2. Verfahren nach Anspruch 1, **dadurch gekennzeichnet, dass** mit Erreichen des Fahrzeugstillstands (100) oder beim automatischen Abschalten der Brennkraftmaschine oder bei verstärktem Durchtreten des Bremspedals bei abgeschalteter Brennkraftmaschine eine Haltefunktion zum automatischen Halten des Fahrzeugs im Stillstand zu aktivieren wird (140).

3. Verfahren nach Anspruch 1 oder 2, **dadurch gekennzeichnet, dass** spätestens mit Lösen der Bremse (136, 150) eine Haltefunktion zum automatischen Halten des Fahrzeugs im Stillstand zu aktiviert wird.

4. Verfahren nach einem der vorangegangenen Ansprüche, **dadurch gekennzeichnet, dass** bei unterbundenem automatischen Starten der Brennkraftmaschine bei Lösen der Bremse (145) die automatisch abgeschaltete Brennkraftmaschine dann automatisch gestartet wird, wenn das Gaspedal betätigt wird (155) oder wenn mittels einer Fußraumüberwachungseinheit eine zeitnahe Betätigung des Gaspedals zu erkennen ist.

5. Verfahren nach einem der vorangegangenen Ansprüche, **dadurch gekennzeichnet, dass** die automatisch aktivierte Haltefunktion 145, 136, 150) deaktiviert wird, wenn die automatisch abgeschaltete Brennkraftmaschine erneut gestartet (145) wird und/oder wenn das Gaspedal betätigt (137,153) wird und/oder wenn die Brennkraftmaschine ein genügend großes Antriebmoment zum Halten des Fahrzeugs im Stillstand zur Verfügung stellt (137).

6. Verfahren nach einem der vorangegangenen Ansprüche, **dadurch gekennzeichnet, dass** ein automatisches Abschalten der Brennkraftmaschine durch Lösen des Bremspedals innerhalb des vorgegebenen Zeitfensters (Tmax) verhindert wird (140).

7. Verfahren nach einem der vorangegangenen Ansprüche, **dadurch gekennzeichnet, dass** ein automatisches Abschalten der Brennkraftmaschine bei Abbremsen und Halten des Fahrzeugs im Stillstand durch Betätigung des Bremspedals innerhalb eines vorgegebenen Zeitfensters (Tmax) nach dem Erreichen des Stillstands verhindert werden kann (140).

8. Verfahren nach Anspruch 7, **dadurch gekennzeichnet, dass** bei Lösen des Bremspedals innerhalb des vorgegebenen Zeitintervalls (Tmax) nach Erreichen des Stillstands das Fahrzeug mittels einer im Stillstand automatisch aktivierbaren Haltefunktion im Stillstand gehalten wird (150).

9. Verfahren nach einem der vorangegangenen Ansprüche, **dadurch gekennzeichnet, dass** bei Erreichen des Stillstands des Fahrzeugs ein erstes Anzeigeelement (LED1) aktiviert (110) wird und/oder bei abgeschalteter Brennkraftmaschine ein zweites Anzeigeelement (LED2) aktiviert (130) wird und/oder bei aktivierter Haltefunktion ein drittes Anzeigeelement aktiviert wird.

10. Vorrichtung zur Durchführung eines Verfahrens nach einem der Ansprüche 1 - 9.

## Claims

1. A method for automatic start and stop of a combustion engine in a motor vehicle, more especially in a motor vehicle with automatic transmission, by means of a start-stop device, which automatically stops the combustion engine when the vehicle is braked to a standstill and is held at standstill by actuation of the brake pedal, and which automatically starts the combustion engine when the combustion engine is automatically stopped and the actuated brake pedal is released, **characterised in that,** when the combustion engine is automatically stopped, an automatic starting of the combustion engine by release of the brake is prevented (145) if a change to the brake pedal actuation in the sense of an increased depression of the brake pedal is recorded beforehand while the combustion engine is stopped.

2. A method according to claim 1, **characterised in that** a holding function for automatically holding the vehicle at a standstill is activated (140) once vehicle standstill has been reached (100) or if the combustion engine is automatically stopped or if there is increased depression of the brake pedal when the combustion engine is stopped.

3. A method according to claim 1 or 2, **characterised in that** a holding function for automatically holding the vehicle at a standstill is activated at the latest when the brake is released (136, 150).

4. A method according to any one of the preceding claims, **characterised in that** with prevented automatic starting of the combustion machine when the brake is released (145), the automatically stopped combustion engine is then automatically started if the gas pedal is actuated (155) or if a time-proximal actuation of the gas pedal is detected by means of a foot well monitoring unit.

5. A method according to any one of the preceding claims, **characterised in that** the automatically activated holding function (145, 136, 150) is deactivated if the automatically stopped combustion engine is started again (145) and/or if the gas pedal is actuated (137, 153) and/or if the combustion engine provides a sufficient drive torque to hold the vehicle at a standstill (137).

6. A method according to any one of the preceding claims, **characterised in that** an automatic stopping of the combustion engine is prevented by release of the brake pedal within the predefined time window (Tmax) (140).

7. A method according to any one of the preceding claims, **characterised in that** an automatic stopping of the combustion engine when the vehicle is braked and held at a standstill can be prevented (140) by actuation of the brake pedal within a predefined time window (Tmax) once standstill has been reached.

8. A method according to claim 7, **characterised in that,** when the brake pedal is released within the predefined time interval (Tmax) once a standstill has been reached, the vehicle is held at standstill (150) by means of a holding function that can be automatically activated at standstill.

9. A method according to any one of the preceding claims, **characterised in that** when a standstill of the vehicle has been reached a first display element (LED1) is activated (110) and/or when the combustion engine is stopped a second display element (LED2) is activated (130) and/or when the holding function is activated a third display element is activated.

10. A device for carrying out a method according to any one of claims 1-9.

## Revendications

1. Procédé de coupure et de démarrage automatique d'un moteur à combustion interne d'un véhicule, en particulier d'un véhicule ayant une boîte de vitesse automatique, au moyen d'un dispositif de démarrage-arrêt qui coupe automatiquement le moteur lorsque le véhicule est freiné à l'arrêt et est maintenu à l'arrêt par actionnement de la pédale de frein, et qui, lorsque le moteur est automatiquement coupé et par relâchement de l'actionnement de la pédale de frein démarre automatiquement le moteur,
**caractérisé en ce que**
lorsque le moteur est automatiquement coupé, un démarrage automatique de celui-ci par relâchement du frein est empêché (145) lorsque, auparavant, le moteur est coupé, une modification de l'actionnement de la pédale de frein dans le sens d'un plus fort appui sur cette pédale a été enregistrée.

2. Procédé conforme à la revendication 1,
**caractérisé en ce que**
lorsque l'arrêt du véhicule (100) a été atteint ou lorsque le moteur a été automatiquement coupé, ou lorsque la pédale de frein a été enfoncée plus fortement, le moteur étant coupé, une fonction de retenue doit être activée pour maintenir automatiquement le véhicule à l'arrêt (140).

3. Procédé conforme à la revendication 1 ou 2,
**caractérisé en ce qu'**
au plus tard lors du relâchement du frein (136, 150) une fonction de retenue doit être activée pour maintenir automatiquement le véhicule à l'arrêt.

4. Procédé conforme à l'une des revendications précédentes,
**caractérisé en ce que**
lorsque le démarrage automatique du moteur est empêché par un relâchement du frein (145), le moteur automatiquement coupé est automatiquement démarré lorsque la pédale d'accélérateur est actionnée (155) ou lorsqu'une unité de surveillance de l'espace du pied, permet d'identifier un actionnement rapide de la pédale d'accélérateur.

5. Procédé conforme à la revendication 1,
**caractérisé en ce que**
la fonction de retenue automatiquement activée (145, 136, 105) est désactivée lorsque le moteur automatiquement coupé est à nouveau démarré (145), et/ou lorsque la pédale d'accélérateur est actionnée (137, 153), et/ou lorsque le moteur dispose d'un couple d'entraînement suffisant pour maintenir le véhicule à l'arrêt (137).

6. Procédé conforme à l'une des revendications précédentes,
**caractérisé en ce qu'**
une coupure automatique du moteur par relâchement de la pédale de frein est empêchée pendant une fenêtre de temps (Tmax) prédéfinie (140).

7. Procédé conforme à l'une des revendications précédentes,
**caractérisé en ce qu'**
une coupure automatique du moteur lors d'un freinage et d'un maintien du véhicule à l'arrêt peut être empêchée (140) par actionnement de la pédale de frein pendant une fenêtre de temps (Tmax) prédéfinie après avoir atteint l'état d'arrêt.

8. Procédé conforme à la revendication 7,
**caractérisé en ce que**
lors du relâchement de la pédale de frein, pendant l'intervalle de temps prédéfini (Tmax) après avoir atteint l'état d'arrêt, le véhicule est maintenu à l'arrêt au moyen d'une fonction de retenue pouvant être activée automatiquement à l'état d'arrêt (150).

9. Procédé conforme à l'une des revendications précédentes,
**caractérisé en ce que**
lorsque l'arrêt du véhicule a été atteint, un premier élément d'affichage (LED1) est activé (110), et/ou lorsque le moteur est coupé, un second élément d'affichage (LED2) est activé (130), et/ou lorsque la fonction de retenue est activée un troisième élément d'affichage est activé.

10. Dispositif permettant la mise en oeuvre d'un procédé conforme à l'une des revendications 1 à 9.
